Europäisches Patentamt

European Patent Office

Office européen des brevets

(19)

(11) **EP 0 924 873 A2**

(12) **EUROPÄISCHE PATENTANMELDUNG**

(43) Veröffentlichungstag:
  **23.06.1999 Patentblatt 1999/25**

(51) Int Cl.$^6$: **H04B 3/20**

(21) Anmeldenummer: **98440278.4**

(22) Anmeldetag: **04.12.1998**

(84) Benannte Vertragsstaaten:
  **AT BE CH CY DE DK ES FI FR GB GR IE IT LI LU MC NL PT SE**
  Benannte Erstreckungsstaaten:
  **AL LT LV MK RO SI**

(30) Priorität: **17.12.1997 DE 19755983**

(71) Anmelder: **ALCATEL**
  **75008 Paris (FR)**

(72) Erfinder: **Maurer, Michael**
  **71336 Waiblingen (DE)**

(74) Vertreter: **Müller, Joachim, Dipl.-Ing. et al**
  **Alcatel**
  **Intellectual Property Department, Stuttgart**
  **Postfach 30 09 29**
  **70449 Stuttgart (DE)**

(54) **Detektion des antworttones für Modems und Faxgeräte**

(57)     Ein Verfahren zur Steuerung einer Echounterdrückungseinrichtung mit an-bzw. abschaltbarer Echokontrollfunktion in einem Telekommunikationssystem, vorzugsweise im DECT-System, wobei ein Antwortton in Sende- und/oder Empfangsrichtung detektiert wird und bei Erkennung des für Modem- bzw. Faxverbindungen typischen Antworttons, insbesondere eines 2100 Hz-Signals, die Echokontrollfunktion abgeschaltet wird, ist dadurch gekennzeichnet, daß zur Erkennung des Antworttons eine diskrete Fourier-Transformation (DFT) verwendet wird, die bevorzugt einen Goertzel-Algorithmus umfaßt. Damit kann das Vorliegen einer Nicht-Sprach-Verbindung besonders schnell und sicher erkannt und die Echokontrollfunktion umgehend automatisch abgeschaltet werden.

Fig.1

**Beschreibung**

Die Erfindung betrifft ein Verfahren zur Steuerung einer Echounterdrückungseinrichtung mit an- bzw. abschaltbarer Echokontrollfunktion in einem Telekommunikationssystem, wobei ein Antwortton in Sende- und Empfangsrichtung detektiert wird und bei Erkennung des für Modem- bzw. Faxverbindungen typischen Antworttons, insbesondere eines 2100 Hz-Signals, die Echokontrollfunktion abgeschaltet wird.

Ein solches Verfahren ist bekannt aus Abstract from Bluebook CCITT, Band VIII.1, Rec. V25, 1988.

Zur komfortableren Gestaltung insbesondere von Ferngesprächen werden heutzutage bei Telefonsystemen immer häufiger Echounterdrückungseinrichtungen eingesetzt, die bei einem entsprechenden Teilnehmer zumindest in den Sprachpausen von verschiedenen Stellen der Leitungsverbindung an das Endgerät des sprechenden Teilnehmers zurückreflektierte Echos der eigenen Sprache unterdrücken. Dies kann beispielsweise durch Einsatz einer Compander-Schaltung bewirkt werden, wie sie z.B. aus US 4,467,146 bekannt ist. Dabei wird gemäß einer festgelegten Dynamikkurve in den Sprachpausen die bei dem betreffenden Teilnehmer ankommende Signallautstärke herabgesetzt, so daß er insbesondere seine eigenen Echosignale kaum noch hört. Während der Teilnehmer selbst oder der von ihm angerufene Partner sprechen, wird von der Compander-Schaltung die normale Lautstärke beibehalten, da während der Sprachphasen das wesentlich schwächere Echo "maskiert" ist und deshalb ebenfalls nicht wahrgenommen wird.

Alternativ oder ergänzend zum Compander-Prinzip können die Echos aber auch durch geeignete Filter, beispielsweise FIR Filter aktiv nachgebildet und ausgefiltert werden, wie beispielsweise in der DE 44 30 189 A1 beschrieben ist.

Falls ein Endgerät mit vorgesehener Echokontrollfunktion jedoch nicht zum Fernsprechen, sondern beispielsweise zur Datenübertragung über ein Modem oder zur Übertragung von Telefaxsignalen verwendet wird, kann eine Aktivierung der Echokontrollfunktion sich störend auf die Sicherheit der aufgebauten Verbindung auswirken. Daher wird verschiedentlich vorgeschlagen, Echounterdrückungseinrichtungen im Falle von Nicht-Sprach-Verbindungen automatisch abzuschalten. In der US 5,530,724 ist beispielsweise ein Verfahren vorgeschlagen, bei dem ein zusätzlicher Kanal zum An- und Abschalten des Echounterdrückers (out-of-band-switching) vorgesehen wird. Über diesen zusätzlichen Kanal kann dann eine Information über die Art der aufgebauten Telekommunikationsverbindung übermittelt werden, so daß beim angerufenen Teilnehmer im Falle einer Nicht-Sprach-Verbindung die Echokontrollfunktion einer etwa vorhandenen Echounterdrückungseinrichtung ausgeschaltet werden kann.

Dieser zusätzliche Kanal kann bei einem in-bandigen Verfahren, wie es in der eingangs zitierten CCITT-Veröffentlichung vorgeschlagen ist, eingespart werden, wenn der typischerweise von einem Faxgerät bzw. einem Modem zur Gegenstelle zurückgesendete sogenannte Antwortton, der das Erkennen der entsprechenden Übertragungsanforderung übermittelt, zur Idendifikation einer Nicht-Sprach-Verbindung benutzt wird. Üblicherweise ist der Antwortton ein 2100 Hz-Signal. In der genannten Druckschrift wird vorgeschlagen, eine Phasenumkehrung von 180° bei dem 2100 Hz-Signalton einzuführen und in Intervallen von 425 bis 475 ms die Phasenumkehr zu detektieren. Nachteilig dabei ist, daß zur sicheren Erkennung einer Fax- oder Modemverbindung mit dem bekannten Verfahren erst mehrere Erkennungsintervalle mit der entsprechenden Phasenbetrachtung abgewartet werden müssen, so daß zur endgültigen Erkennung einer Nicht-Sprach-Verbindung eine Zeitspanne von der Größenordnung mehrerer Sekunden benötigt wird.

Aufgabe der vorliegenden Erfindung ist es demgegenüber, ein Verfahren der eingangs genannten Art dahingehend zu verbessern, daß anstelle der umständlichen und langwierigen Detektion des Vorliegens einer Nicht-Sprach-Verbindung eine wesentlich schnellere Erkennung einer derartigen Verbindung und dementsprechend eine umgehende Abschaltung der Echokontrollfunktion ermöglicht wird, wobei kein zusätzlicher Signalkanal wie bei den bekannten Out-of-band-Verfahren erforderlich sein soll. Erfindungsgemäß wird diese Aufgabe auf ebenso überraschende wie wirkungsvolle Art und Weise dadurch gelöst, daß zur Erkennung des Antworttons eine diskrete Fourier-Transformation (DFT) verwendet wird.

Im Gegensatz zu dem bekannten Out-of-band-switching wird dabei durch inbandige Signalisierung eine automatische Abschaltung der Echounterdrückungsfunktion bei Verbindungsaufbau einer Nicht-Sprach-Verbindung ohne äußere Kontrollfunktion erreicht, wobei aber die umständlichen Phasenbetrachtungen bei bekannten inbandigen Verfahren nicht mehr erforderlich sind und durch die Verwendung der diskreten Fourier-Transformation eine wesentliche Beschleunigung der sicheren Erkennung des Vorliegens einer Modem- bzw. Faxverbindung und damit eine besonders schnelle automatische Abschaltung der Echokontrollfunktion ermöglicht wird. Da im voraus nicht bekannt ist, in welcher Richtung die Datenübertragung angefordert wird, sollte sowohl die Sende- als auch die Empfangsrichtung entsprechend überwacht werden.

Besonders vorteilhaft wird das erfindungsgemäße Verfahren bei drahtlosen Endgeräten, insbesondere DECT-Systemen angewandt. Betrachtet man bei DECT-Geräten eine Verbindung von einem internen bzw. externen Modem (oder Fax) mit einem drahtlosen Modem (oder Fax), so kann es bei eingeschalteter Echokontrollfunktion noch leichter als bei reinen Drahtverbindungen zu einem Verbindungsabbruch kommen. Dies kommt in der Regel immer dann vor, wenn das drahtgebundene Gegengerät stark gedämpft ist, also eine lange Leitung aufweist, da die Echokontrollfunktion im DECT-System die Datenübertragung zusätzlich dämpfen kann. Um dem begegnen zu können, ist insbesondere in DECT-Systemen die Überwachung auf eventuelle Modem-Fax-Verbindungen und gegebenenfalls die automatische schnelle Abschaltung der Echokontrollfunktion besonders wichtig. Dadurch kann auch die Reichweite von Fax- bzw. Modemverbindungen wie bei drahtgebundenen Verbindungen vergrößert werden.

Ganz besonders bevorzugt ist eine Ausführungsform des erfindungsgemäßen Verfahrens, bei der die diskrete Fourier-Transformation einen Goertzel-Algorithmus umfaßt.

Durch die Verwendung des Goertzel-Algorithmus wird die Detektion besonders schnell, das Verfahren erfordert einen relativ geringen Speicherbedarf und eine extrem niedrige Rechenleistung. Der auswählbare Spektralbereich, der zur Erkennung einer Nicht-Sprach-Verbindung dient, kann im Verhältnis zum empfangenen Gesamtspektrum besonders schmalbandig gewählt werden, was die Erkennungssicherheit und die Geschwindigkeit einer sicheren Erkennung enorm erhöht.

Bevorzugt ist auch eine Verfahrensvariante, bei der für einen bestimmten Beobachtungszeitraum der Energieinhalt des Gesamtspektrums der empfangenen Signale mit dem Energieinhalt eines mittels der diskreten Fourier-Transformation ausgefilterten Teilspektrums verglichen wird.

Damit wird die Treffsicherheit der Detektion und folglich die Sicherheit gegen Fehlabschaltungen durch das erfindungsgemäße Verfahren noch weiter erhöht.

Bei einer konkreten Weiterbildung dieser bevorzugten Verfahrensvariante sind folgende Schritte vorgesehen:

(a) Aus den empfangenen einzelnen Eingangssignalen x(n) wird zu Zeitpunkten n eine umhüllende SAM(n) des gesamten Empfangsspekrums aufgenommen.

(b) Als Maß für den Energieinhalt des Gesamtspektrums wird das Quadrat $SAM^2$ gebildet.

(c) Als Maß für den Energieinhalt des ausgefilterten Teilspektrums wird

$$y^2(N) = x(N) + x(N-1) \cdot [-W^k_N]$$

mit $W^k_N = \cos(2\pi \cdot f_1/f_0) + i \sin(2\pi \cdot f_1/f_0)$ gebildet, wobei $f_1$ die gewählte Filterfrequenz und $f_0$ die Abtast-Frequenz ist.

(d) Die Werte $SAM^2(N)$ und $y^2(N)$ werden verglichen und bei $SAM^2(N) < y^2(N)$ wird der detektierte Ton als gesuchter Antwortton verifiziert.

Besonders einfach durchzuführen ist dieses Verfahren, wenn

- Schritt (a) während eines vorgegebenen Zeitfensters $\Delta t$ zwischen den Zeitpunkten $n = 1$ bis $n = N$ wiederholt durchgeführt wird;
- laufend die Werte

$$g(1,n) = x(n) + g(1,n-1) \cdot \cos(2\pi \cdot f_1/f_o) \cdot g(2,n-1)$$

und $g(2,n) = g(1,n-1)$ mit den Startwerten $g(1,0) = g(2,0) = 0$ berechnet werden;

Bei einer Abtast-Frequenz $f_0 = 8$ kHz und einer Filterfrequenz $f_1 = (2100 \pm 15)$ Hz wird vorteilhaft $\Delta t$ zwischen 3 ms und 33 1/3 ms, vorzugsweise $\Delta t \approx 20$ ms gewählt.

Um eine besonders hohe Sicherheit der Erkennung einer Nicht-Sprach-Verbindung gegen Störsignale zu erlangen, ist bei einer weiteren bevorzugten Verfahrensvariante vorgesehen, daß

- die Prozedur m-fach wiederholt wird, falls Schritt (d) jeweils zur Verifizierung des Antworttones führt
- oder ein Neustart mit Wiederholung der Prozedur so oft vorgenommen wird, bis Schritt (d) jeweils m-mal in Folge zur Verifizierung des Antworttones führt
- und sodann die Echokontrollfunktion abgeschaltet wird.

Die Anzahl m, mit der die Prozedur wiederholt wird, sollte vorteilhafterweise zwischen 5 und 200, vorzugsweise im Bereich von $m \approx 20$ gewählt werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert.

Es zeigen:

Fig. 1    ein Gesamtschema einer bevorzugten Variante des erfindungsgemäßen Verfahrens;

Fig. 2    ein Schema der inneren Schleife des Verfahrens nach Fig. 1; und

Fig. 3    ein Schema der äußeren Schleife des Verfahrens nach Fig. 1.

Um zur Vermeidung von Störungen in der Verbindung die eventuell angeschalteten Echokontrollfunktionen abschalten zu können, soll bei Telekommunikationssystemen, insbesondere bei DECT-Systemen festgestellt werden, ob Modem- bzw. Fax-Verbindungen, allgemein Nicht-Sprach-Verbindungen vorliegen. Dazu wird erfindungsgemäß mittels Diskreter Fourier-Transformation (DFT), insbesondere unter Verwendung eines sogenannten Goertzel-Algorithmus der Antwortton (= answering tone, 2100 Hz ± 15 Hz) in Sende- und Empfangsrichtung detektiert. Damit kann in einem vorhandenen DECT-System mit Compander und/oder FIR-Filter die Reichweite von Fax- bzw. Modemverbindungen wie bei drahtgebundenen Verbindungen vergrößert werden.

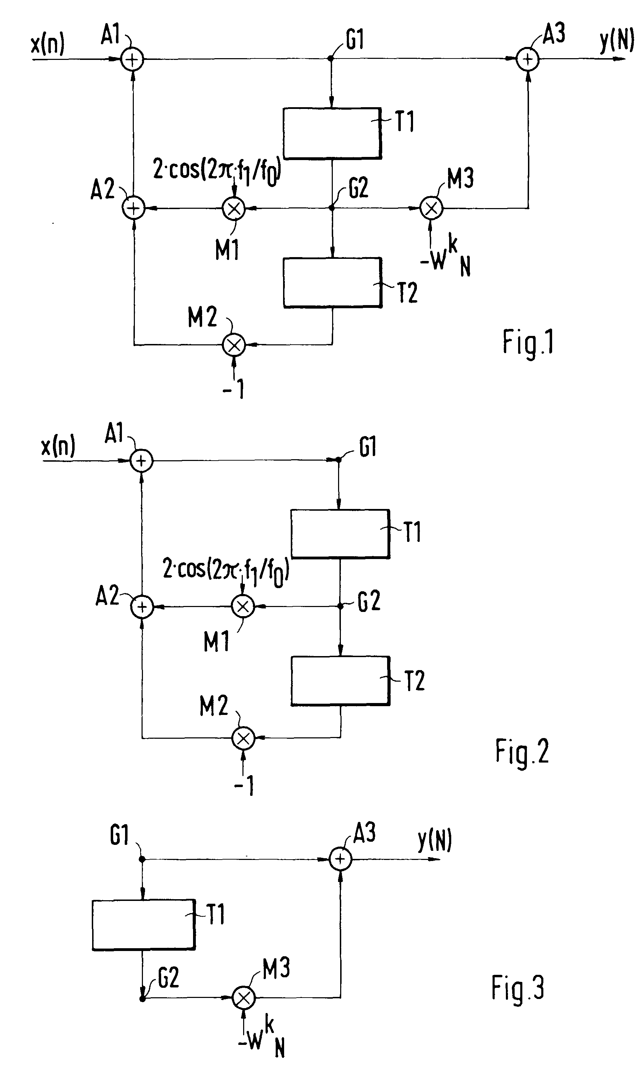

In Fig. 1 ist schematisch der Ablauf einer erfindungsgemäßen Verfahrensvariante zur schnellen Erkennung des Vorliegens einer Nicht-Sprach-Verbindung dargestellt. Dabei werden zu Zeitpunkten n jeweils einzelne Eingangssignale $x(n)$ einer Verarbeitungsschleife zugeführt und entsprechend dem unten näher erläuterten Schema bearbeitet, um ein Ergebnis $y(N)$ zu einem späteren Zeitpunkt N zu erlangen. Das Quadrat des Ergebnisses $y(N)$, welches abhängig von der gewählten Bandbreite eines Filters nur alle k Sekunden (für die Detektion des "Answering tones" beträgt die Zeit $\Delta t \approx 20$ ms) berechnet werden muß, wird mit dem Quadrat des Kurzzeitmittelwertes (=SAM) des Eingangssignals $x(n)$ verglichen. Ist dieses größer als das Quadrat von SAM, so wird davon ausgegangen, daß im Zeitschlitz mit der Länge $\Delta t$ (k Sekunden) ein Tonsignal mit 2100 Hz angelegen hat. Um die Detektion sicher zu machen, soll in einem Intervall von 420 ms in jedem aufeinanderfolgenden 20 ms-Zeitschlitz die Bedingung erfüllt sein, daß das Quadrat von $y(N)$ größer ist als das von SAM. Nur dann wird davon ausgegangen, daß es sich um einen "Answering tone" handelt und in der vorliegenden Anwendung wird die Echokontrollfunktion abgeschaltet und "gebypasst". Wird im 420 ms intervall nur ein Zeitschlitz gefunden, in dem oben genannte Bedingung nicht erfüllt wird, so wird der Zähler für das intervall neu gestartet. Damit wird gewährleistet, daß die Detektion des "Answering tones" und damit das Abschalten der Echokontrollfunktion nicht durch Sprach- oder Störsignale verursacht wird.

Das Verfahrensschema nach Fig. 1 kann in zwei Ablaufschleifen aufgeteilt werden, wobei die innere Schleife (die linke in Fig. 1) immer dann ausgeführt wird, wenn ein neues Datensignal $x(n)$ eingelesen wird, während die äußere Schleife (in der Darstellung von Fig. 1 der rechte Teil) nur am Ende einer Berechnungsperiode durchlaufen wird, wenn n = N erreicht ist. Diese Zeitperiode ist umgekehrt proportional zur Bandbreite des durch den Goertzel-Algorithmus repräsentierten IIR-Filters. Wenn die entsprechende Zeitdauer abgelaufen und die Energieinhalte berechnet sind, werden die in der Figur dargestellten Speicherplätze G1 und G2 auf 0 rückgesetzt.

Anhand von Fig. 2 soll nun die innere Schleife des Goertzel-Algorithmus näher erläutert werden:

Das zu einem Zeitpunkt n = 1 ankommende Eingangssignal $x(n)$ wird zunächst am Speicherplatz G1 gespeichert und sodann nach Durchlaufen eines Zeitverzögerungsgliedes T1 einem weiteren Speicherplatz G2 zugeführt. Von dort aus wird in einer Teilschleife der entsprechende Wert an der Stelle M1 einer Multiplikation mit $2 \cdot \cos(2\pi \cdot f_1/f_0)$ unterzogen und in einer weiteren Teilschleife nach einer Verzögerung in einem Verzögerungsglied T2 an einer Stelle M2 einer Multiplikation mit dem Faktor -1 unterzogen. Die Ergebnisse der beiden Teilschleifen werden an der Stelle A2 addiert und einem weiteren ankommenden Einzelsignal $x(n)$ an der Stelle A1 zuaddiert. Die innere Schleife wird dann solange durchlaufen, bis der Zeitwert n = N erreicht ist.

Was dann passiert, ist in Fig. 3, die die oben erwähnte äußere Schleife zeigt, näher dargestellt:

In der äußeren Schleife wird jeweils bei Erreichen von n = N der zu diesem Zeitpunkt im Speicherplatz G1 abgespeicherte letzte Wert an der Stelle A3 addiert zu einem Produkt aus dem zum gleichen Zeitpunkt im Speicherplatz G2 gespeicherten Wert mit dem sogenannten "Twittle" (Phasenfaktor)

$$-W^k_n = \sin(2\pi \cdot f_1/f_0) + i \cdot \cos(2\pi \cdot f_1/f_0).$$

Am Ausgang wird so das Ergebnis $y(N) = G1 + G2 \cdot [-W^k_n]$ erhalten.

Zur Berechnung des Energieinhalts wird das Quadrat $y^2(N)$ berechnet, das sich reduzieren läßt zu

$$y^2(N) = (G1 - G2)^2 + 2 \cdot G1 \cdot G2 \cdot [1 - \cos(2\pi \cdot f_1/f_0)]$$

Die so erhaltene spektrale Energie des beobachteten Teilspektrums wird mit dem Energieinhalt des gesamten Empfangsspektrums, der durch Quadratbildung der Kurzzeitmittelwerte SAM gebildet wird, verglichen. Eine Verifikation, daß der gesuchte Antwortton in der letzten Zeitperiode von n = 1 bis n = N vorhanden war, erfolgt immer dann, wenn der spektrale Energieinhalt größer als der Energieinhalt des gesamten Empfangsspektrums ist, also $y^2(N) >$ $SAM^2(N)$.

Um die Antwortton-Detektion gegen Irrtümer und Störungen zu schützen, kann die oben beschriebene Prozedur einige Male, vorzugsweise ungefähr 20 mal in Folge wiederholt werden, wobei in jeder einzelnen der aufeinander folgenden Zeitperioden, während denen die Prozedur jeweils abläuft, der Antwortton positiv verifiziert werden muß, um sicherzugehen, daß die Echokontrollfunktion tatsächlich abgeschaltet werden darf.

**Patentansprüche**

1.  Verfahren zur Steuerung einer Echounterdrückungseinrichtung mit an- bzw. abschaltbarer Echokontrollfunktion in einem Telekommunikationssystem, wobei ein Antwortton in Sende- und/oder Empfangsrichtung detektiert wird und bei Erkennung des für Modem- bzw. Faxverbindungen typischen Antworttons, insbesondere eines 2100 Hz-Signals, die Echokontrollfunktion abgeschaltet wird,
    **dadurch gekennzeichnet**,
    daß zur Erkennung des Antworttons eine diskrete Fourier-Transformation (DFT) verwendet wird.

2.  Verfahren nach Anspruch 1, dadurch gekennzeichnet, daß das Verfahren bei drahtlosen Endgeräten, insbesondere im DECT-System, angewandt wird.

3.  Verfahren nach einem der vorhergehenden Ansprüche, dadurch gekennzeichnet, daß die diskrete Fourier-Transformation einen Goertzel-Algorithmus umfaßt.

4.  Verfahren nach einem der vorhergehenden Ansprüche, dadurch gekennzeichnet, daß für einen bestimmten Beobachtungszeitraum der Energieinhalt des Gesamtspektrums der empfangenen Signale mit dem Energieinhalt eines mittels der diskreten Fourier-Transformation ausgefilterten Teilspektrums verglichen wird.

5.  Verfahren nach Anspruch 3 und 4, dadurch gekennzeichnet, daß

    (a) aus den empfangenen einzelnen Eingangssignalen x(n) zu Zeitpunkten n eine umhüllende SAM(n) des gesamten Empfangsspekrums aufgenommen wird;

    (b) als Maß für den Energieinhalt des Gesamtspektrums das Quadrat $SAM^2$ gebildet wird;

    (c) als Maß für den Energieinhalt des ausgefilterten Teilspektrums

    $$y^2(N) = x(N) + x(N-1) \cdot [-W^k_N]$$

    mit $W^k_N = \cos(2\pi \cdot f_1/f_0) + i \sin(2\pi \cdot f_1/f_0)$ gebildet wird, wobei $f_1$ die gewählte Filterfrequenz und $f_0$ die Abtast-Frequenz ist;

    (d) die Werte $SAM^2(N)$ und $y^2(N)$ verglichen werden und bei $SAM^2(N) < y^2(N)$ der detektierte Ton als gesuchter Antwortton verifiziert wird.

6.  Verfahren nach Anspruch 5, dadurch gekennzeichnet, daß

    -   Schritt (a) während eines vorgegebenen Zeitfensters $\Delta t$ zwischen den Zeitpunkten n = 1 bis n = N wiederholt durchgeführt wird;

    -   laufend die Werte

    $$g(1,n) = x(n) + g(1,n=1) \cdot \cos(2\pi \cdot f_1/f_0) - g(2,n-1)$$

    und g(2,n) = g(1,n-1) mit den Startwerten g(1,0) = g(2,0) = 0 berechnet werden;

- die Schritte (b), (c), (d) erst am Ende des Zeitfensters $\Delta t$ bei n = N durchgeführt werden.

7. Verfahren nach Anspruch 6, dadurch gekennzeichnet, daß bei einer Abtast-Frequenz $f_0$ = 8 kHz und einer Filter-frequenz $f_1$ = (2100 ± 15) Hz At zwischen 3 ms und 33 1/3 ms, vorzugsweise $\Delta t \approx$ 20 ms gewählt wird.

8. Verfahren nach Anspruch 6 oder 7, dadurch gekennzeichnet, daß

- die Prozedur m-fach wiederholt wird, falls Schritt (d) jeweils zur Verifizierung des Antworttones führt

- oder ein Neustart mit Wiederholung der Prozedur so oft vorgenommen wird, bis Schritt (d) jeweils m-mal in Folge zur Verifizierung des Antworttones führt

- und sodann die Echokontrollfunktion abgeschaltet wird.

9. Verfahren nach Anspruch 8, dadurch gekennzeichnet, daß m zwischen 5 und 200, vorzugsweise m $\approx$ 20 gewählt wird.

Fig.1

Fig.2

Fig.3